# EUROPEAN PATENT SPECIFICATION

(11) **EP 2 363 584 B1**
(45) Date of publication and mention of the grant of the patent: **27.03.2013**
(21) Application number: 10195175.4
(22) Date of filing: 15.12.2010
(51) Int. Cl.: F02B 37/007, F02B 37/013

(54) **Multi-stage supercharger system for internal combustion engine**
Mehrstufen-Aufladesystem für einen Verbrennungsmotor
Système de suppresseur multi-étage pour moteur à combustion interne

(30) Priority: 25.02.2010 JP 2010039548
(43) Date of publication of application: 07.09.2011
(73) Proprietor: Honda Motor Co., Ltd., Minato-ku Tokyo 107-8556 (JP)
(72) Inventor: Ogawa, Masahito, Wako-shi Saitama 351-0193 (JP); Izumi, Yasuhiko, Wako-shi Saitama 351-0193 (JP)
(74) Representative: Trossin, Hans-Jürgen

(56) References cited:
- EP-A2- 1 998 022
- DE-U1-202009 003 280
- FR-A1- 2 918 710
- US-A1- 2009 014 674

## Description

### TECHNICAL FIELD

The present invention relates to a multi-stage supercharger system for an internal combustion engine, according to the preamble part of claim 1 known from FR 2 918 710 A1.

### BACKGROUND OF THE INVENTION

It is known to provide a supercharger system including a high pressure stage and a low pressure stage connected in a sequential configuration in an intake/exhaust system of an internal combustion engine, and vary the flow rate of the exhaust gas that is introduced into each stage of the supercharger device in dependence on the rotational speed of the engine. Such a supercharger device is sometimes called as "sequential turbocharger system". See Japanese patent laid open publication No. 2003-531966 (patent document 1), for instance. The sequential turbocharger system enables the supercharging to be enhanced over a wide range of engine rotational speeds by using the high pressure stage having a relatively small capacity in a low speed range and the low pressure stage having a relatively large capacity in a high speed range.

However, the multi-stage supercharger system requires two individual supercharger units and a piping system connecting the two supercharger units to each other so that the overall size inevitably increases. Also, the path of the exhaust gas increases in length, and the resulting drop in the exhaust gas temperature impairs the performance of a catalytic converter typically provided downstream to the supercharger system. To alleviate this problem, it has been proposed to form the turbine housings of the two supercharger units as an integral member with the aim of bringing the two supercharger units as close to each other as possible. See Japanese patent laid open publication No. 2004-92646 (patent document 2). In this supercharger system, the length of the path of the exhaust gas can be minimized, and no connecting members such as flanges are required to be provided between the two individual supercharger units so that the heat capacity of the overall supercharger system can be minimized, and this in turn prevents undue drop in the temperature of the exhaust gas.

However, according to this prior proposal, the compressor housings of the two supercharger units are provided on opposite sides of the two turbine housings so that the axial length of the overall supercharger system is undesirably long, and a further improvement in this regard is desired. This also causes an increase in the piping that connect the two compressor housings.

### BRIEF SUMMARY OF THE INVENTION

In view of such problems of the prior art, a primary object of the present invention is to provide a multi-stage supercharger system for an internal combustion engine which is highly compact and simple in structure.

A second object of the present invention is to provide a multi-stage supercharger system for an internal combustion engine which has a small heat capacity, and thereby avoids impairment in the performance of a catalytic converter connected to the downstream end of the supercharger system.

To achieve such objects, the present invention provides a multi-stage supercharger system for a multi-cylinder engine, comprising: an exhaust manifold including an exhaust merge passage that merges exhaust gas expelled from a plurality of cylinders of the engine; a first supercharger unit including a first turbine housing having an inlet communicating with the exhaust merge passage via a main passage, a first compressor housing connected to the first turbine housing in a coaxial relationship and a first shaft extending internally between the first turbine housing and first compressor housing; and a second supercharger unit including a second turbine housing having an inlet communicating with an outlet of the first turbine housing via a connecting passage, a second compressor housing connected to the second turbine housing in a coaxial relationship and a second shaft extending internally between the second turbine housing and second compressor housing; wherein the first and second supercharger units are placed adjacent to each other in a mutually parallel relationship, and the first turbine housing is located on a same side of the first compressor housing as the second turbine housing is located with respect to the second compressor housing, the first turbine housing being axially offset with respect to the second turbine housing toward the first compressor housing, and wherein the main passage and connecting passage are defined by a main passage member and a connecting passage member, respectively, and the main passage member, first turbine housing, connecting passage member and second turbine housing are integrally formed to one another.

Thereby, the first supercharger unit and second supercharger unit can be placed close to each other, and the overall size of the supercharger system can be minimized. In particular, as the first and second supercharger units are placed adjacent to each other in a mutually parallel relationship, and the first turbine housing is located on a same side of the first compressor housing as the second turbine housing is located with respect to the second compressor housing, the lengths of the connecting passages connecting the two turbine housings to each other and the two compressor housings to each other can be minimized. Because the first turbine housing is axially offset with respect to the second turbine housing toward the first compressor housing, the interferences between the two turbine housings and between the two compressor housings can be avoided, and this allows the two supercharger units to be placed close to each other.

Furthermore, because the main passage member, first turbine housing, connecting passage member and second turbine housing are integrally formed to one another, the need for connecting members such as connecting flanges may be eliminated, and this allows not only the two units to be placed close to each other but also the thermal capacity of the supercharger system can be reduced so that the drop in the temperature of the exhaust gas can be minimized.

When the supercharger system further comprises a bypass passage communicating the exhaust merge passage with the connecting passage, and the member defining the bypass passage is additionally formed integrally with the connecting passage member, a connecting member such as a flange otherwise required between the bypass passage member and connecting passage member can be eliminated, and this also contributes to the simplification of the structure and reduction in the thermal capacity.

According to a preferred embodiment of the present invention, the merge passage is provided with a first outlet communicating with the main passage and a second outlet communicating with the bypass passage, and the first and second outlets open out at a common connecting surface formed in the exhaust manifold. Thereby, the connection of the main passage member and bypass passage member to the exhaust manifold can be simplified.

According to another aspect of the present invention, an end of the main passage remote from the first turbine housing and an end of the bypass passage remote from the connecting passage both open out at a common connecting surface of a flange. This also simplifies the connection of the main passage member and bypass passage member to the exhaust manifold can be simplified.

According to a particularly preferred embodiment of the present invention, the first outlet of the merge passage is offset from the second outlet of the merge passage in a substantially same direction as the first turbine housing is offset from the second turbine housing. Thereby, the lengths of the main passage and bypass passage can be minimized.

Preferably, the first compressor housing partly overlaps with the second compressor housing along an axial direction of the first shaft so that the distance between the first and second supercharger units can be minimized, and the overall profile of the supercharger system can thereby be minimized.

### BRIEF DESCRIPTION OF THE DRAWINGS

Now the present invention is described in the following with reference to the appended drawings, in which:
Figure 1 is a front view of a first embodiment of a two-stage supercharger system;
Figure 2 is a schematic diagram of an intake/exhaust system of an internal combustion engine incorporated with the two-stage supercharger system of Figure 1;
Figure 3 is a front view of an exhaust manifold of the engine;
Figure 4 is a front view of the two-stage supercharger system;
Figure 5 is a left side view of the two-stage supercharger system;
Figure 6 is a perspective view of the two-stage supercharger system as seen from lower left;
Figure 7 is a fragmentary schematic diagram of a second embodiment of a two-stage supercharger system;
Figure 8 is a fragmentary schematic diagram of a third embodiment of a two-stage supercharger system;
Figure 9 is a fragmentary schematic diagram of a fourth embodiment of a two-stage supercharger system; and
Figure 10 is a fragmentary schematic diagram of a fifth embodiment of a two-stage supercharger system.

### DETAILED DESCRIPTION OF THE PREFERRED EMBODIMENTS

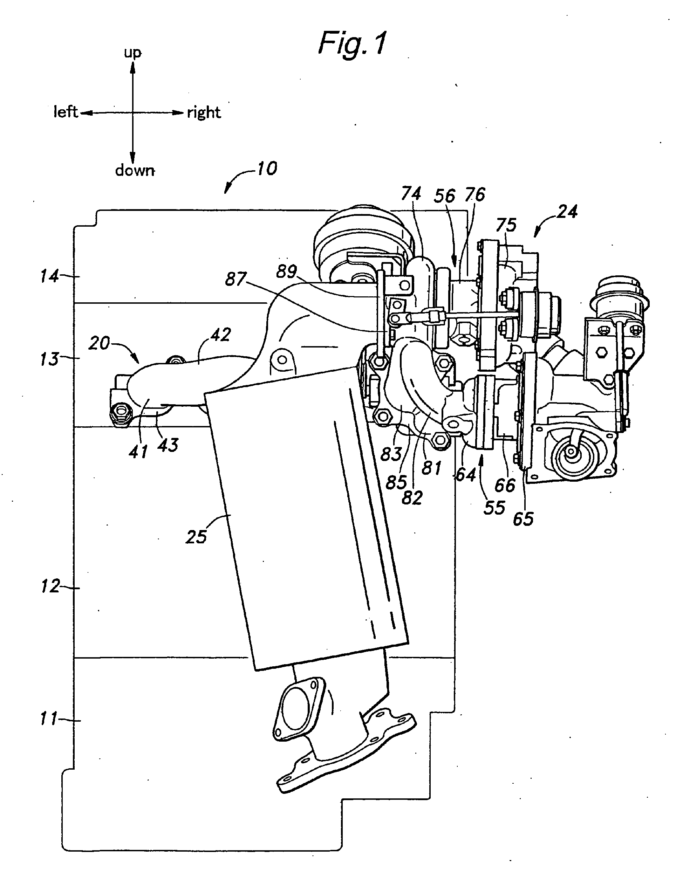

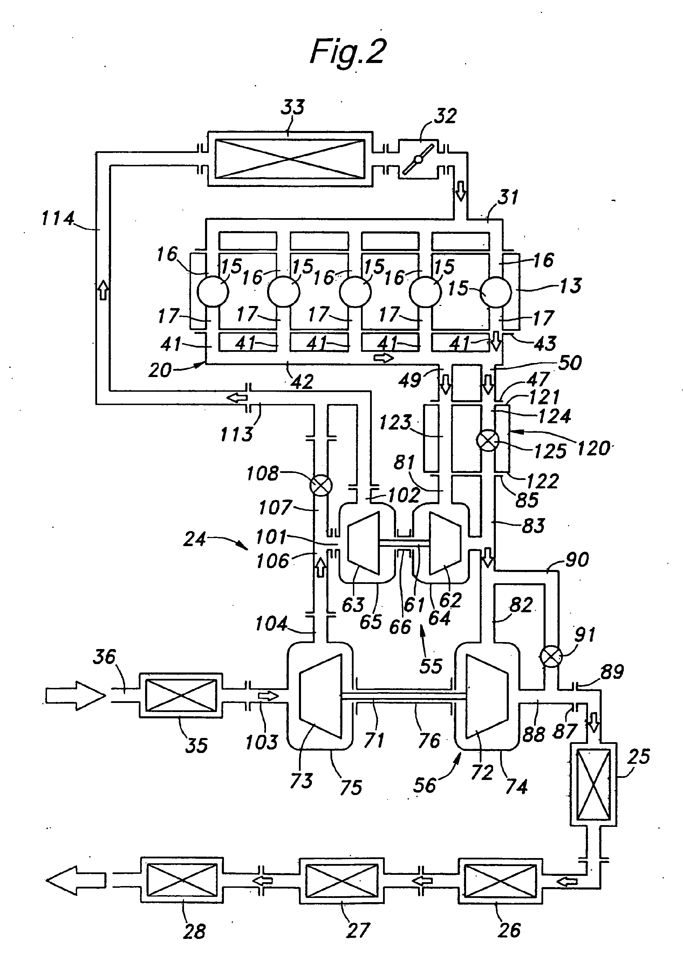

Referring to Figure 1, an exemplary inline five-cylinder internal combustion engine 10 is shown by a profile thereof, and is configured to be installed laterally in an engine room of an automobile not shown in the drawings. The engine 10 comprises an oil pan 11, a cylinder block 12, a cylinder head 13 and a cylinder head cover 14, from the bottom to the top end in that order. As shown in Figure 2, the cylinder head 13 is formed with intake ports 16 and exhaust ports 17 communicating with corresponding cylinders 15 formed in the cylinder block 12 via engine valves not shown in the drawings. Each exhaust port 17 opens out from a rear side of the cylinder head 13 (front side of the cylinder head as seen in Figure 1), and each intake port 16 opens out from a front side of the cylinder head 13.

To the rear side of the cylinder head 13 is attached an exhaust manifold 20 defming an internal passage communicating with the exhaust ports 17. To the downstream end of the exhaust manifold 20 is connected a two-stage supercharger system 24 given as an exemplary embodiment of the present invention. The downstream end of the supercharger system 24 is connected to a catalytic converter 25, a DPF 26, a NOx purification unit 27 and a muffler 28 in series in that order as illustrated in Figure 2.

As shown in Figure 2, to the front side of the cylinder head 13 is attached an intake manifold 31 defining an internal passage communicating with the intake ports 16. The upstream end of the intake manifold 31 is connected to a throttle valve 32, an intercooler 33, the two-stage supercharger device 24, an air filer 35 and an air inlet 36 in series in that order.

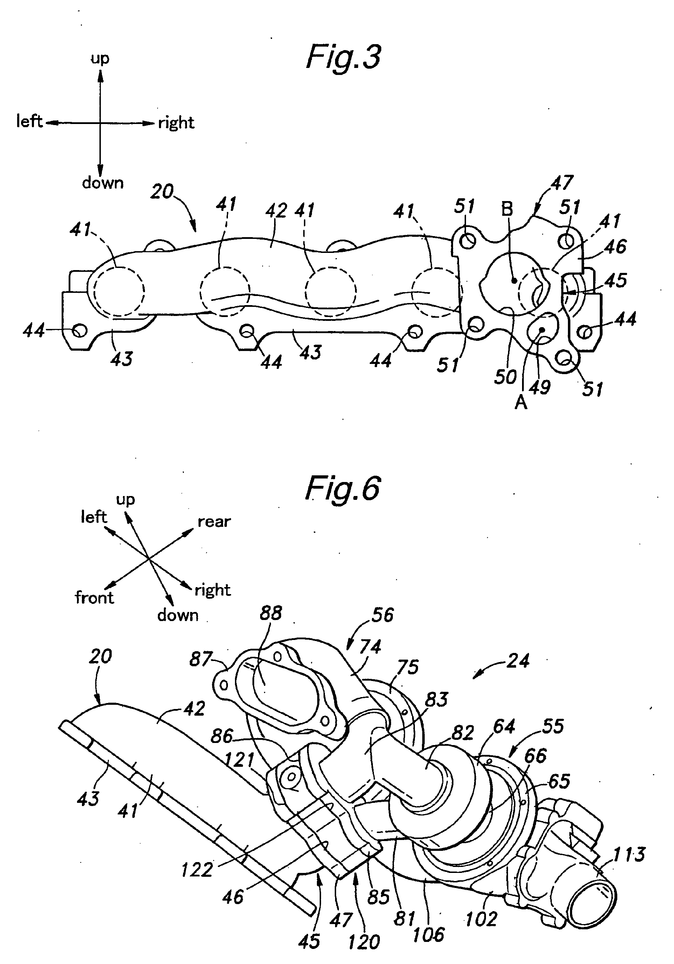

Referring to Figure 3, the internal passage defined in the exhaust manifold 20 includes five branch passages 41 communicating with the respective exhaust ports 17 and a merge passage 42 commonly communicating with the downstream ends of the branch passages 41. Each branch passage 41 extends substantially in the fore and aft direction, and the rear end of the exhaust manifold 20 is provided with an upstream flange 43 for attachment to the front side of the cylinder head 13. The upstream flange 43 is formed with mounting holes 44 for receiving threaded bolts for the purpose of this attachment.

The merge passage 42 extends substantially in the lateral direction, and opens out in a forward direction at a connecting portion 45 formed in a right end part of the exhaust manifold 20, in addition to being communicated with the downstream ends of the branch passages 41. The connecting portion 45 includes a downstream flange 47 formed around the outlet end of the merge passage 42 and defining a planar connecting surface 46 extending substantially perpendicular to the fore and aft direction of the vehicle body. The connecting surface 46 is provided with a main port 49 and a bypass port 50 both individually communicating with the interior of the merge passage 42. The main port 49 has a substantially smaller opening area than the bypass port 50. The center (centroid) A of the main port 49 is offset from the center (centroid) B of the bypass port 50 in a rightward and downward direction. The downstream flange 47 is provided with mounting holes 51 for receiving threaded bolts along the outer periphery thereof.

As illustrated in Figures 1 to 6, the two-stage supercharger system 24 is constructed as a sequential supercharger system including a high pressure supercharger unit (first stage) 55 and a low pressure supercharger unit (second stage) 56.

The high pressure supercharger unit 55 comprises a high pressure shaft 61 that coaxially and integrally supports a high pressure turbine rotor 62 and a high pressure compressor rotor 63, a high pressure turbine housing 64 receiving the high pressure turbine rotor 62 therein, a high pressure compressor housing 65 receiving the low pressure compressor rotor 63 therein, and a high pressure bearing housing 66 that joins the high pressure turbine housing 64 with the high pressure compressor housing 65 and is incorporated with a bearing (not shown in the drawings) for rotatably supporting the high pressure shaft 61. The high pressure turbine housing 64 and high pressure compressor housing 65 are each formed as a cylindrical annular member, and are attached to the respective axial ends of the high pressure bearing housing 66, which is also formed as a cylindrical annular member, all disposed in a coaxial relationship with respect to a common axial line C. The high pressure turbine housing 64 is smaller in radial dimension and volumetric capacity than the high pressure compressor housing 65.

The low pressure supercharger unit 56 comprises a low pressure shaft 71 that coaxially and integrally supports a low pressure turbine rotor 72 and a low pressure compressor rotor 73, a low pressure turbine housing 74 receiving the low pressure turbine rotor 72 therein, a low pressure compressor housing 75 receiving the low pressure compressor rotor 73 therein, and a low pressure bearing housing 76 that joins the low pressure turbine housing 74 with the low pressure compressor housing 75 and is incorporated with a bearing (not shown in the drawings) for rotatably supporting the low pressure shaft 71. The low pressure turbine housing 74 and low pressure compressor housing 75 are each formed as a cylindrical annular member, and are attached to the respective axial ends of the low pressure bearing housing 76, which is also formed as a cylindrical annular member, all disposed in a coaxial relationship with respect to a common axial line D. The low pressure turbine housing 74 is smaller in radial dimension and volumetric capacity than the low pressure compressor housing 75. The low pressure turbine housing 74 has a larger radial dimension than the high pressure turbine housing 64.

A peripheral part of the high pressure turbine housing 64 is connected to the downstream end of a main passage pipe 81 defining a main passage for admitting exhaust gas into the high pressure turbine housing 64, and an axial end of the high pressure turbine housing 64 facing away from the high pressure bearing housing 66 is centrally connected the upstream end of an exhaust connecting pipe 82 defining an exhaust connecting passage for expelling exhaust gas from the interior of the high pressure turbine housing 64. The downstream end of the exhaust connecting pipe 82 is connected to a peripheral part of the low pressure turbine housing 74 to admit exhaust gas into the low pressure turbine housing 74. Also, an end of an exhaust bypass pipe 83 is connected to the exhaust connecting pipe 82. The exhaust bypass pipe 83 and exhaust connecting pipe 82 can be connected to each other in a number of different ways. For instance, the downstream end of the exhaust bypass pipe 83 may be connected to the peripheral part of the low pressure turbine housing 74 while the upstream end of the exhaust connecting pipe 82 may be connected to a suitable part of the exhaust bypass pipe 83. Alternatively, the exhaust bypass pipe 83 and exhaust connecting pipe 82 may be individually connected to the periphery of the low pressure turbine housing 74.

The upstream ends of the main passage pipe 81 and exhaust bypass pipe 83 are surrounded by a single common connecting flange 85, and the passages defined in the main passage pipe 81 and exhaust bypass pipe 83 individually open out from a connecting surface 86 of the common connecting flange 85.

From a central part of an axial end of the low pressure turbine housing 74 facing away from the low pressure bearing housing 76 extends an exhaust outlet pipe 88 which is surrounded by a radial flange 87 at a free end or an outlet end thereof. To this flange 87 is joined a flange 89 formed at the upstream end of the catalytic converter 25 by using threaded bolts.

The low pressure turbine housing 74 is formed with a wastegate passage 90 communicating with both the exhaust connecting passage 82 and exhaust outlet passage 88 and provided with a wastegate valve 91. The wastegate valve 91 is designed to adjust the flow rate of the exhaust gas that flows into the wastegate passage 90, and hence the flow rate of the exhaust gas that flows into the low pressure turbine housing 74. The wastegate valve 91 is mechanically connected to a first actuator 94, consisting of a diaphragm actuator in the illustrated embodiment, via a link mechanism 93 so as to be actuated by the first actuator 94 as required. The first actuator 94 is mounted on a mounting base formed on the exterior of the low pressure compressor housing 75, and is controlled by an ECU not shown in the drawings.

From a central part of an axial end of the high pressure compressor housing 65 facing away from the high pressure bearing housing 66 extends a high pressure intake inlet pipe 101 that defines a high pressure intake inlet passage therein. From a peripheral part of the high pressure compressor housing 65 tangentially extends a high pressure intake outlet pipe 102 that defines a high pressure intake outlet passage therein.

Similarly, from a central part of an axial end of the low pressure compressor housing 75 facing away from the low pressure bearing housing 76 extends a low pressure intake inlet pipe 103 that defines a low pressure intake inlet passage therein. From a peripheral part of the low pressure compressor housing 75 tangentially extends a low pressure intake outlet pipe 104 that defines a low pressure intake outlet passage therein.

The upstream end of the low pressure intake inlet pipe 103 is connected to the downstream end of the air filter 35. The low pressure intake outlet pipe 104 is connected to the high pressure intake inlet pipe 101 of the high pressure compressor via an intake connecting pipe 106. The intake connecting pipe 106 is bifurcated in the downstream end thereof, and additionally defines an intake bypass passage 107 provided with an intake bypass valve 108. The intake bypass valve 108 adjusts the flow rate of the intake air flowing into the intake bypass passage 107, and hence the flow rate of the intake air flowing into the high pressure compressor housing 65. The intake bypass valve 108 is mechanically connected to a second actuator 110, consisting of a diaphragm actuator in the illustrated embodiment, via a link mechanism 109 so as to be actuated as required. The second actuator 110 is mounted on the exterior of the high pressure compressor housing 65 via a bracket 111, and is controlled by the ECU not shown in the drawings.

The downstream ends of the high pressure intake outlet pipe 102 and intake bypass pipe 107 merge into a communication pipe 113. The downstream end of the communication pipe 113 is connected to the upstream end of the intercooler 33 via another communication pipe 114.

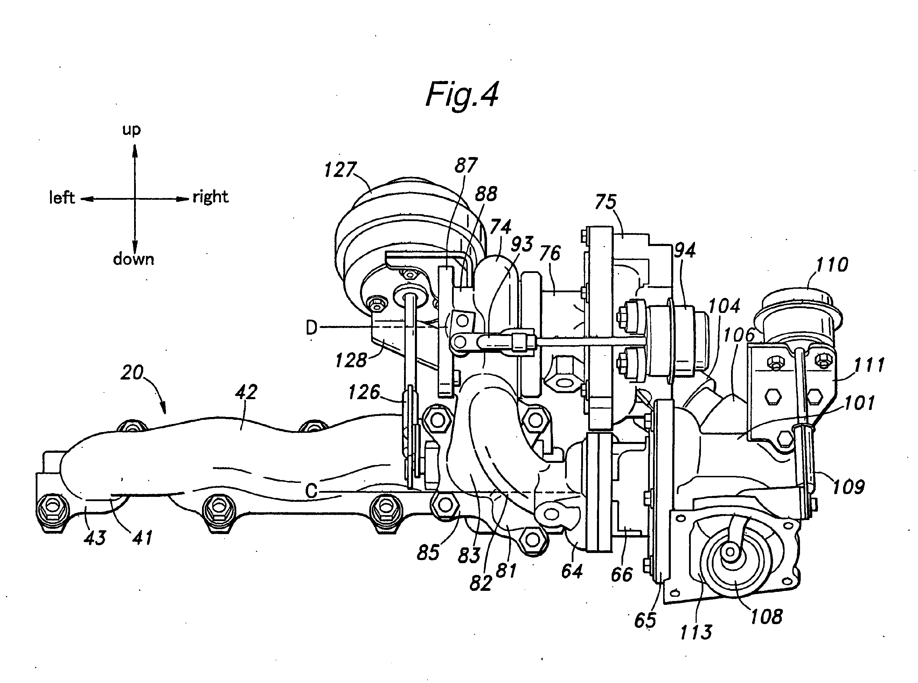

As shown in Figure 4, the high pressure supercharger unit 55 and low pressure supercharger units 56 are disposed such that the axial line C of the high pressure shaft 61 extends laterally and in parallel with the axial line D of the low pressure shaft 71. Furthermore, the high pressure turbine housing 64 is placed on a same side of the low pressure compressor housing 65 as the low pressure turbine housing 74 is placed with respect to of the high pressure compressor housing 75. In the illustrated embodiment, the high pressure turbine housing 64 is placed on the left hand side of the low pressure compressor housing 65, and the low pressure turbine housing 74 is likewise placed on the left hand side of the high pressure compressor housing 75. As a modification of the invention, the high pressure turbine housing 64 may be placed on the right hand side of the low pressure compressor housing 65 while the low pressure turbine housing 74 is likewise placed on a right hand side of the high pressure compressor housing 75.

Furthermore, the high pressure supercharger unit 55 is provided at a lower elevation than the low pressure supercharger units 56, and is somewhat rightwardly offset from the low pressure supercharger units 56 along the axial line C such that the high pressure turbine housing 64 overlaps with the high pressure compressor housing 75 along the axial line C. In particular, the high pressure supercharger unit 55 is placed in relation to the low pressure supercharger units 56 such that the part of the low pressure compressor housing 65 having a relatively large radial dimension is axially offset from the part of the high pressure compressor housing 75 having a relatively large radial dimension, and the high pressure supercharger unit 55 and low pressure supercharger units 56 may be placed close to each other without interference.

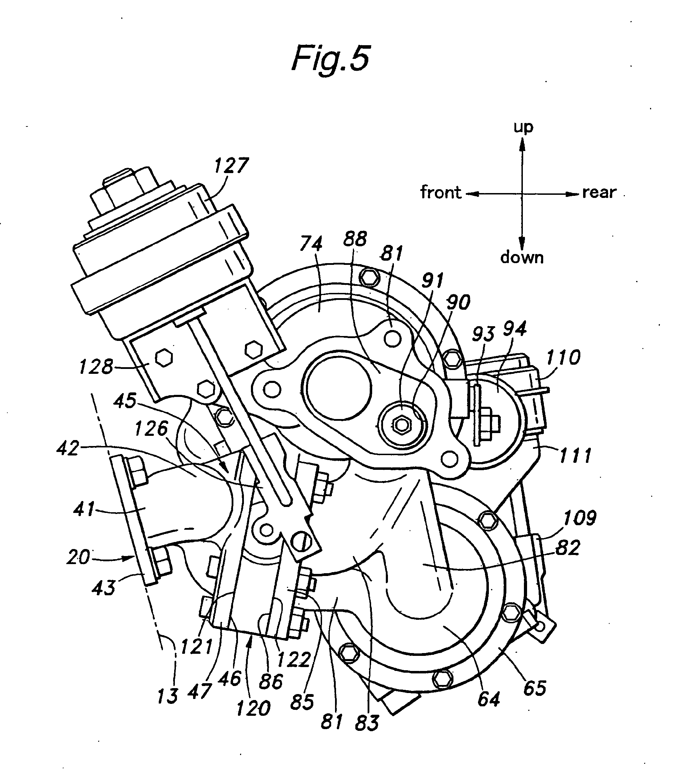

Thus, the high pressure supercharger unit 55 and low pressure supercharger units 56 are placed as close to each other as possible without interfering with each other. In particular, the distance between the axial centers of the high pressure shaft 61 and low pressure shaft 71 is minimized. As shown in Figure 5, the high pressure supercharger unit 55 and low pressure supercharger units 56 are brought so close to each other that the outer profile of the two units overlap each other as seen from the direction of the axial line C or on the projection plane perpendicular to the axial line C.

As shown in Figure 4, the connecting flange 85 is placed so as to substantially laterally overlap or coincide with the low pressure turbine housing 74, and to be located to the left of the high pressure turbine housing 64. Also, the connecting flange 85 is placed so as to substantially vertically overlap or coincide with the high pressure turbine housing 64, and to be located below the low pressure turbine housing 74. Therefore, the exhaust bypass pipe 83 is not required to be extended in the lateral direction, and may simply extend in the vertical direction by a short distance. Likewise, the main passage pipe 81 is not required to be extended in the vertical direction, and may simply extend in the substantially lateral direction by a short distance.

The part of the main passage pipe 81 connected to the connecting flange 85 is located to the right of and below the part of the exhaust bypass passage 83 connected to the connecting flange 85 so that the lengths of the main passage pipe 81 and exhaust bypass passage 83 can be minimized without causing any interference between the two pipes.

In the illustrated embodiment, the connecting flange 85, main passage pipe 81, high pressure turbine housing 64, exhaust connecting pipe 82, exhaust bypass pipe 83, low pressure turbine housing 74, exhaust outlet pipe 88 and wastegate passage 90 are cast integrally as a single piece member in such a manner that the high pressure supercharger unit 55 and low pressure supercharger units 56 are positioned as described above. In the illustrated embodiment, the turbine housings and associated passages members are cast as a single member, but may also be integrally formed by other means, such as welding metallic components and injection molding plastic material.

The downstream flange 47 of the exhaust manifold 20 is joined to the connecting flange 85 of the two-stage supercharger system 24 via a passage unit 120 by using threaded bolts. The passage unit 120 is provided with an exhaust manifold side end surface 121 configured to make a surface contact to the connecting surface 46 of the downstream flange 85, a supercharger side end surface 122 configured to make a surface contact to the connecting surface of the connecting flange 85, and a first and second passage 123 and 124 communicating the exhaust manifold side end surface 121 with the supercharger side end surface 122 in a mutually independent manner. Thus, with the passage unit 120 interposed between the downstream flange 47 and downstream flange 85, the first passage 123 communicates the main port 49 with the main passage pipe 81, and the second passage 124 communicates the bypass port 50 with the exhaust bypass pipe 83.

The second passage 124 is provided with an exhaust bypass valve 125 which adjusts the flow rate of the exhaust gas flowing into the exhaust bypass pipe 83 and hence the flow rate of the exhaust gas flowing into the high pressure turbine housing 64 via the first passage 123. The exhaust bypass valve 125 is connected to a third actuator 127 consisting of a diaphragm actuator via a link mechanism 126. The third actuator 127 is attached to the exterior of the low pressure turbine housing 74 via a bracket 128, and is controlled by the ECU not shown in the drawings.

The mode of operation of the supercharger system 24 illustrated in Figures 1 to 6 is described in the following. When the engine 10 is operating at a low speed, the exhaust bypass valve 125, wastegate valve 91 and intake bypass valve 108 are fully closed so that the exhaust gas is allowed to pass through the high pressure turbine housing 64, low pressure turbine housing 74, and the intake air is also allowed to pass through the high pressure compressor housing 75 and low pressure compressor housing 65. Under this condition, because the flow rate of the exhaust gas is relatively small, the high pressure supercharger unit (first stage) 55 serves as the main supercharger unit while the low pressure supercharger unit (second stage) 56 rotates but is essentially idle.

When the engine 10 is operating at a medium speed, the control unit of the two-stage supercharger system 24 controls the flow rate of the exhaust gas flowing into the high pressure turbine housing 64 by adjusting the opening angle of the exhaust bypass valve 125 so as to limit the supercharge pressure below a prescribed level while the wastegate valve 91 and intake bypass valve 108 are kept closed. At this time, the high pressure supercharger unit 55 and low pressure supercharger unit 56 are both in operation.

As the rotational speed of the engine 10 is increased further to a higher level, the exhaust bypass valve 125 and intake bypass valve 108 are fully opened, and the flow rate of the exhaust gas flowing into the low pressure turbine housing 74 is controlled by adjusting the opening of the wastegate valve 91 so that the supercharge pressure may be kept below a prescribed level. At this time, the low pressure supercharger unit 56 serves as the main supercharger unit. In this manner, the supercharger system 24 is enabled to provide a required supercharge pressure over a wide range of engine rotational speed.

In particular, in the supercharger system 24 of the illustrated embodiment, as the connecting flange 85, main passage pipe 81, high pressure turbine housing 64, exhaust connecting pipe 82, exhaust bypass pipe 83, low pressure turbine housing 74, exhaust outlet pipe 88 and wastegate passage 90 are cast integrally as a single piece member, fastening members such as flanges and threaded bolts are not required for otherwise separate components, and this reduces the heat capacity of the supercharger system 24. Also, the omission of such fastening members allows the high pressure supercharger unit 55 and low pressure supercharger unit 56 to be brought close to each other.

In the supercharger system 24, because the high pressure turbine housing 64 is placed on a same side of the low pressure compressor housing 65 as the low pressure turbine housing 74 is placed with respect to of the high pressure compressor housing 75, the high pressure turbine housing 64 and low pressure turbine housing 74 may be placed close to each other. In particular, because the low pressure compressor housing 65 can be brought close to the high pressure compressor housing 75 so that the lengths of the exhaust connecting pipe 82 and intake connecting pipe 106 can be minimized.

Because the high pressure supercharger unit 55 is offset rightward with respect to the low pressure supercharger units 56 along the axial line C so that the part of the low pressure compressor housing 65 having the maximum radial dimension and the part of the high pressure compressor housing 75 having the maximum radial dimension can be offset from each other along the axial line C so as not to interfere with each other, the distance between the high pressure supercharger unit 55 and the low pressure supercharger units 56 (the distance between the high pressure shaft 61 and low pressure shaft 71) can be minimized. Also, owing to the displacement of the high pressure supercharger unit 55 to the right of the low pressure supercharger unit 56 along the axial line C, the distance between the axial end of the high pressure turbine housing 64 remote from the high pressure bearing housing 66 and the peripheral part of the low pressure turbine housing 74 can be minimized, and the axial end of the low pressure turbine housing 64 remote from the low pressure baring housing 76 and the peripheral part of the low pressure turbine housing 74 can be minimized with the result that the lengths of the exhaust connecting pipe 82 and intake connecting pipe 106 can be minimized.

As the low pressure turbine housing 74 and bypass port 50 substantially laterally coincide with each other, and the main port 49 is rightwardly offset with respect to the bypass port 50 so as to correspond to the rightward offset of the low pressure turbine housing 74 with respect to the high pressure turbine housing 64, the lengths of the main passage pipe 81 and exhaust bypass pipe 83 can be minimized. As the low pressure turbine housing 74 is located above the downstream flange 47, and the high pressure turbine housing 64 is located to the right of the downstream flange 47 whereas the main port 49 is placed at a substantially same elevation as the high pressure turbine housing 64 and the bypass port 50 is placed higher than the main port 49, the lengths of the main passage pipe 81 and exhaust bypass pipe 83 can be minimized.

As the main port 49 and bypass port 50 open out at the connecting surface 46 of the downstream flange 47, and the main passage pipe 81 and exhaust bypass pipe 83 open out at the connecting surface 86 of the connecting flange 85, the communication between the two connecting surfaces can be simplified. In particular, by placing the open ends of the main passage pipe 81 and exhaust bypass pipe 83 on a continuous common plane, the necessary number of gaskets can be reduced, and a stable seal performance can be obtained. Also, the machining work of the exhaust manifold 20 can be simplified.

The two-stage supercharger device 24 of the illustrated embodiment has such a layout that the lengths of the main passage pipe 81, exhaust connecting pipe 82 and exhaust bypass pipe 83 can be minimized, and this contributes to the reduction in the heat capacity of the two-stage supercharger device 24. The reduced heat capacity minimizes the temperature drop in the exhaust gas, and this contributes to an improvement in the efficiency of the two-stage supercharger device 24 in addition to avoid the reduction in the performance of the catalytic converter.

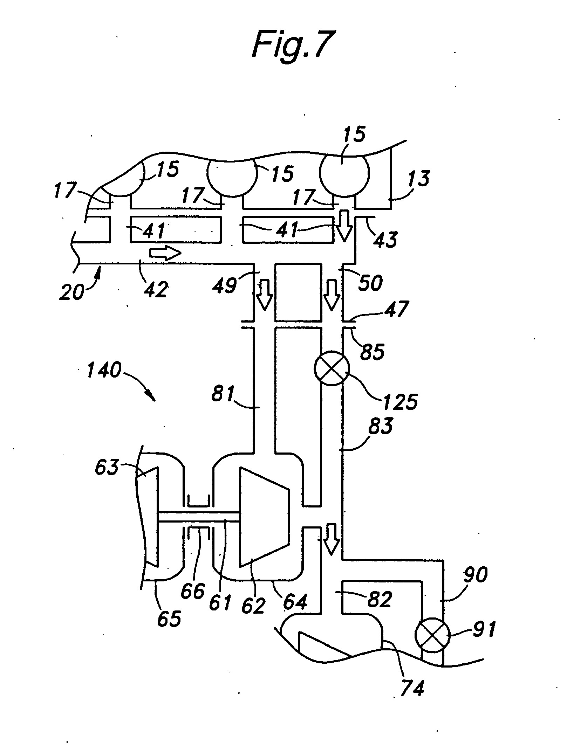

A second embodiment of the present invention is described in the following with reference to Figure 7. In Figure 7, the parts corresponding to those of the previous embodiment are denoted with like numerals without repeating the description of such parts.

Referring to Figure 7, in the two-stage supercharger device 140 of the second embodiment, the connecting flange 85 is connected directly to the downstream flange 47 of the exhaust manifold 20 without the intervention of a passage unit 120. The main passage pipe 81 directly communicates with the main port 49, and the exhaust bypass pipe 83 directly communicates with the bypass port 50. The exhaust bypass pipe 83 is internally provided with an exhaust bypass valve 125.

According to this embodiment, the path length of the exhaust gas can be reduced by the length of the passage unit 120, and this contributes to the compact design of the engine 10 and reduction in the temperature drop of the exhaust gas.

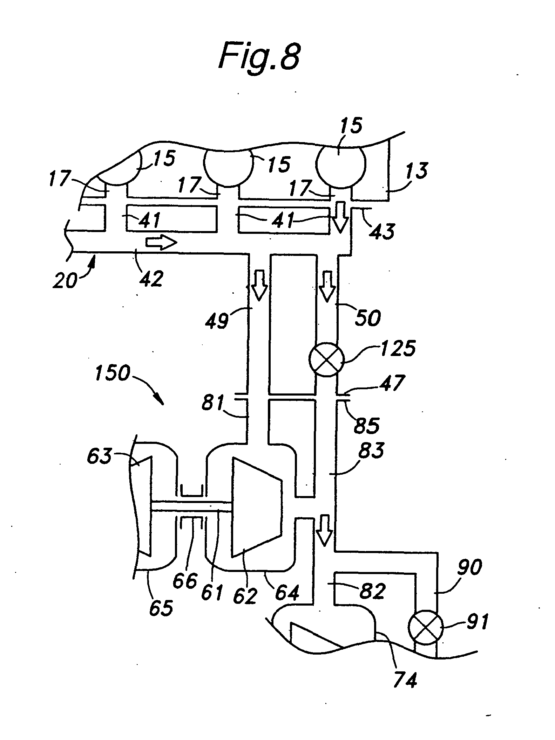

Figure 8 shows a third embodiment of the present invention, in which the parts corresponding to those of the previous embodiments are denoted with like numerals without repeating the description of such parts.

In the two-stage supercharger device 150 of the third embodiment, the passage unit 120 is omitted similarly as the second embodiment, the exhaust bypass pipe 83 directly communicates with the bypass port 50. Thereby, the overall structure of the integral assembly including the connecting flange 85, main passage pipe 81, high pressure turbine housing 64, exhaust connecting pipe 82, exhaust bypass pipe 83, low pressure turbine housing 74, exhaust outlet pipe 88 and wastegate passage 90 can be simplified in structure, and this simplifies the casting process.

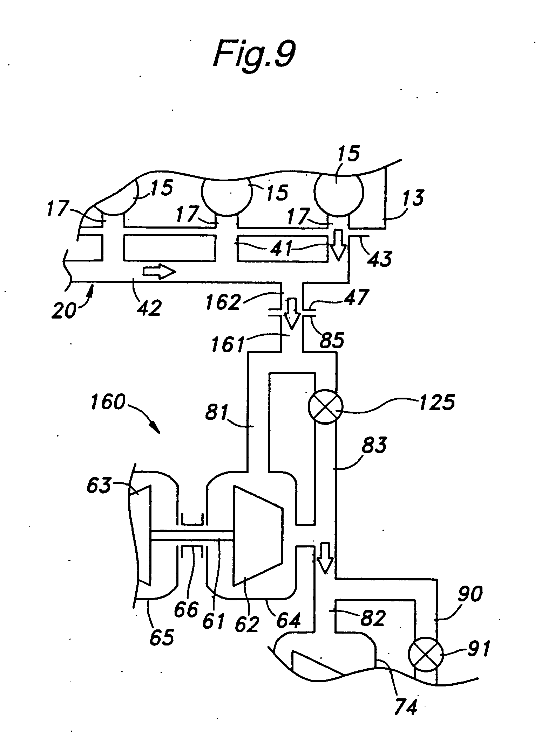

Figure 9 shows a fourth embodiment of the present invention, in which the parts corresponding to those of the previous embodiments are denoted with like numerals without repeating the description of such parts.

In the two-stage supercharger device 160 of the fourth embodiment, the upstream ends of the main port 81 and exhaust bypass pipe 83 merge into a common passage 161 whose upstream end opens out at the connecting surface 86 of a connecting flange 85. The exhaust bypass pipe 83 is internally provided with an exhaust bypass valve 125. The exhaust manifold 20 is provided with a single main port 162 that opens out at the connecting surface 46 of the downstream flange 47 so that the main port 162 communicates with the merge passage 161 when the connecting flange 85 and downstream flange 47 are connected to each other. According to this arrangement, the structure of the exhaust manifold 20 can be simplified.

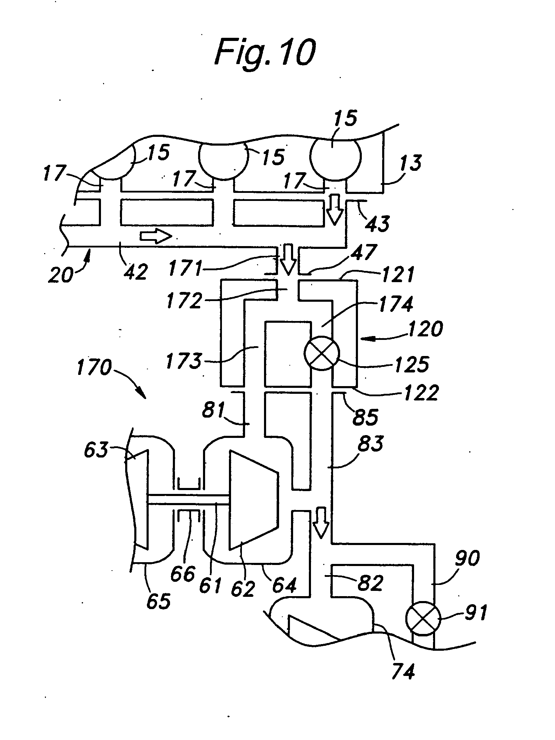

Figure 10 shows a fifth embodiment of the present invention, in which the parts corresponding to those of the previous embodiments are denoted with like numerals without repeating the description of such parts.

In the two-stage supercharger device 170 of the fifth embodiment, the connecting flange 85 is connected to the downstream flange 47 of the exhaust manifold 20 via a passage unit 120 similarly as the first embodiment. The exhaust manifold 20 is provided with a single main port 171 opening out at the interface 46 of the downstream flange 47. The passage unit 120 comprises a merge passage 172 having an upstream end communicating with a side end portion 121 of the exhaust manifold 20, a first and second passage 173 and 174 bifurcating from the downstream end of the merge passage 172, and an exhaust bypass valve 125 provided in the second passage 174. With the passage unit 120 interposed between the connecting flange 85 and downstream flange 47, the merge passage 172 communicates with the main port 171, the first passage 173 communicates with the main passage pipe 81, and the second passage 174 communicates with the exhaust bypass pipe 83. According to this arrangement, the structure of the assembly comprising the main passage pipe 8, exhaust bypass pipe 83 and exhaust manifold 20 can be simplified.

The present invention was applied to automotive diesel engines in the foregoing description, but is equally applicable to gasoline engines. The engines are not limited to automotive engines but may also consist of marine engines and industrial engines, and may have any number of cylinders. Also, the engine type may be inline, V-type, horizontal crankshaft or vertical crankshaft as required.

In the foregoing embodiments, the exhaust merge passage was defined in an exhaust manifold which is formed separately from the cylinder head 13, but the exhaust manifold may also be integrally formed with the cylinder head 13 without departing from the sprit of the present invention. In such a case, the merge passage is defined within the cylinder head, and the connecting portion 45 and downstream flange 47 are formed on a side of the cylinder head 13.

The connecting flange 85, main passage pipe 81, high pressure turbine housing 64, exhaust connecting pipe 82, exhaust bypass pipe 83, low pressure turbine housing 74, exhaust outlet pipe 88 and wastegate passage 90 were cast integrally as a single piece member in the foregoing embodiments, but only the connecting flange 85, main passage pipe 81, high pressure turbine housing 64, exhaust connecting pipe 82 and low pressure turbine housing 74 may be integrally cast or otherwise formed when desired, and the exhaust bypass pipe 83, exhaust outlet pipe 88 and wastegate passage 90 may be optionally cast or otherwise formed with the remaining part of the assembly.

The low pressure supercharger units 56 was placed above the high pressure supercharger unit 55 in the foregoing embodiments, but may also be placed below the high pressure supercharger unit 55 depending on the circumstance.

Thus, in preferred embodiments of the present invention, a first supercharger unit (55) having a first turbine housing (64) and a first compressor housing (65), and a second supercharger unit (56) having a second turbine housing (74) and a second compressor housing (75) are placed adjacent to each other in a mutually parallel relationship. The first turbine housing is located on a same side of the first compressor housing as the second turbine housing is located with respect to the second compressor housing, and the first turbine housing is axially offset with respect to the second turbine housing toward the first compressor housing. A main passage communicates the first turbine housing with a merge passage (42) of an exhaust manifold (20), and a connecting passage communicates the first and second turbine housings with each other. The main passage and connecting passage are defined by a main passage member (81) and a connecting passage member (82) which are integrally cast with the first turbine housing and second turbine housing. Thereby, the overall profile of the system can be minimized, and the required passages can be established with the minimum use of connecting members such as flanges.

Although the present invention has been described in terms of preferred embodiments thereof, it is obvious to a person skilled in the art that various alterations and modifications are possible without departing from the scope of the present invention which is set forth in the appended claims.

In a multi-stage sequential supercharger system for a multi-cylinder engine, a first supercharger unit (55) having a first turbine housing (64) and a first compressor housing (65), and a second supercharger unit (56) having a second turbine housing (74) and a second compressor housing (75) are placed adjacent to each other in a mutually parallel relationship. The first turbine housing is located on a same side of the first compressor housing as the second turbine housing is located with respect to the second compressor housing, and the first turbine housing is axially offset with respect to the second turbine housing toward the first compressor housing. A main passage communicates the first turbine housing with a merge passage (42) of an exhaust manifold (20), and a connecting passage communicates the first and second turbine housings with each other. The main passage and connecting passage are defined by a main passage member (81) and a connecting passage member (82) which are integrally cast with the first turbine housing and second turbine housing. Thereby, the overall profile of the system can be minimized, and the required passages can be established with the minimum use of connecting members such as flanges.

## Claims

1. A multi-stage supercharger system for a multi-cylinder engine (10) comprising:
an exhaust manifold (20) including an exhaust merge passage (42) that merges exhaust gas expelled from a plurality of cylinders (15) of the engine (10);
a first supercharger unit (55) including a first turbine housing (64) having an inlet communicating with the exhaust merge passage (42) via a main passage (81), a first compressor housing (65) connected to the first turbine housing (64) in a coaxial relationship and a first shaft (61) extending internally between the first turbine housing (64) and first (65) compressor housing (65); and
a second supercharger unit (56) including a second turbine housing (74) having an inlet communicating with an outlet of the first turbine housing (64) via a connecting passage (82), a second compressor housing (75) connected to the second turbine housing (74) in a coaxial relationship and a second shaft (71) extending internally between the second turbine housing (74) and second compressor housing (75), wherein the first and second supercharger units (55, 56) are placed adjacent to each other in a mutually parallel relationship, and the first turbine housing (64) is located on a same side of the first compressor housing (65) as the second turbine housing (74) is located with respect to the second compressor housing (75), the first turbine housing (64) being axially offset with respect to the second turbine housing (74) toward the first compressor housing (65), and
the main passage and connecting passage are defined by a main passage member (81) and a connecting passage member (82), respectively,
**characterized in that** the main passage member (81), first turbine housing (64), connecting passage member (82) and second turbine housing (74) are integrally formed to one another.

2. The multi-stage supercharger system according to claim 1,
further comprising a bypass passage (83) communicating the exhaust merge passage (42) with the connecting passage (82), a member (83) defining the bypass passage is formed integrally with the connecting passage member (82).

3. The multi-stage supercharger system according to claim 2,
wherein the merge passage (42) is provided with a first outlet (49) communicating with the main passage (81) and a second outlet (50) communicating with the bypass passage (83), and the first and second outlets (49, 50) open out at a common connecting surface (46) formed in the exhaust manifold (20).

4. The multi-stage supercharger system according to claim 3,
wherein an end of the main passage (81) remote from the first turbine housing (64) and an end of the bypass passage (83) remote from the connecting passage (82) both open out at a common connecting surface (121) of a flange.

5. The multi-stage supercharger system according to claim 3 or 4,
wherein the first outlet (49) of the merge passage (42) is offset from the second outlet (50) of the merge passage (42) in a substantially same direction as the first turbine housing (64) is offset from the second turbine housing (74).

6. The multi-stage supercharger system according to any one of the preceding claims,
wherein the first compressor housing (65) partly overlaps with the second compressor housing (75) along an axial direction of the first shaft (61).

## Patentansprüche

1. Mehrstufen-Kompressorsystem für einen Mehrzylinder-Motor (10), umfassend:
einen Auslasskrümmer (20), umfassend einen Abgaszusammenführungsdurchgang (42), welcher von einer Mehrzahl von Zylindern (15) des Motors (10) ausgestoßenes Abgas zusammenführt;
eine erste Kompressoreinheit (55), umfassend ein erstes Turbinengehäuse (64), welches einen mit dem Abgaszusammenführungsdurchgang (42) über einen Hauptdurchgang (81) in Verbindung stehenden Einlass aufweist, ein erstes Kompressorgehäuse (65), welches mit dem ersten Turbinengehäuse (64) in koaxialer Beziehung verbunden ist, und eine erste Welle (61), welche sich intern zwischen dem ersten Turbinengehäuse (64) und dem ersten Kompressorgehäuse (65) erstreckt; und
eine zweite Kompressoreinheit (56), umfassend ein zweites Turbinengehäuse (74), welches einen mit einem Auslass des ersten Turbinengehäuses (64) über einen Verbindungsdurchgang (82) in Verbindung stehenden Einlass aufweist, ein zweites Kompressorgehäuse (75), welches mit dem zweiten Turbinengehäuse (74) in koaxialer Beziehung verbunden ist, und eine zweite Welle (71), welche sich intern zwischen dem zweiten Turbinengehäuse (74) und dem zweiten Kompressorgehäuse (75) erstreckt, wobei die erste und die zweite Kompressoreinheit (55, 56) benachbart zueinander in wechselseitig paralleler Beziehung angeordnet sind und sich das erste Turbinengehäuse (64) auf einer gleichen Seite des ersten Kompressorgehäuses (65) befindet wie sich das zweite Turbinengehäuse (74) in Bezug zu dem zweiten Kompressorgehäuse (75) befindet, wobei das erste Turbinengehäuse (64) in Bezug zu dem zweiten Turbinengehäuse (74) axial in Richtung zu dem ersten Kompressorgehäuse (65) versetzt ist, und
wobei der Hauptdurchgang und der Verbindungsdurchgang durch ein Hauptdurchgangselement (81) bzw. ein Verbindungsdurchgangselement (82) definiert sind,
**dadurch gekennzeichnet, dass** das Hauptdurchgangselement (81), das erste Turbinengehäuse (64), das Verbindungsdurchgangselement (82) und das zweite Turbinengehäuse (74) integral miteinander gebildet sind.

2. Mehrstufen-Kompressorsystem nach Anspruch 1,
ferner umfassend einen Umgehungsdurchgang (83), welcher den Abgaszusammenführungsdurchgang (42) mit dem Verbindungsdurchgang (82) verbindet, wobei ein den Umgehungsdurchgang definierendes Element (83) integral mit dem Verbindungsdurchgangselement (82) gebildet ist.

3. Mehrstufen-Kompressorsystem nach Anspruch 2,
wobei der Zusammenführungsdurchgang (42) mit einem mit dem Hauptdurchgang (81) in Verbindung stehenden ersten Auslass (49) und mit einem mit dem Umgehungsdurchgang (83) in Verbindung stehenden zweiten Auslass (50) bereitgestellt ist, und wobei sich der erste und der zweite Auslass (49, 50) an einer gemeinsamen Verbindungsfläche (46) öffnen, welche in dem Auslasskrümmer (20) gebildet ist.

4. Mehrstufen-Kompressorsystem nach Anspruch 3,
wobei sich sowohl ein von dem ersten Turbinengehäuse (64) entferntes Ende des Hauptdurchgangs (81) als auch ein von dem Verbindungsdurchgang (82) entferntes Ende des Umgehungsdurchgangs (83) an einer gemeinsamen Verbindungsfläche (121) eines Flanschs öffnen.

5. Mehrstufen-Kompressorsystem nach Anspruch 3 oder 4,
wobei der erste Auslass (49) des Zusammenführungsdurchgangs (42) von dem zweiten Auslass (50) des Zusammenführungsdurchgangs (42) in eine im Wesentlichen gleiche Richtung versetzt ist wie das erste Turbinengehäuse (64) von dem zweiten Turbinengehäuse (74) versetzt ist.

6. Mehrstufen-Kompressorsystem nach einem der vorhergehenden Ansprüche, wobei das erste Kompressorgehäuse (65) das zweite Kompressorgehäuse (75) entlang einer axialen Richtung der ersten Welle (61) teilweise überlappt.

## Revendications

1. Système de turbocompresseur multi-étage pour un moteur polycylindrique (10), comprenant:
un collecteur d'échappement (20) comportant un passage de mélange d'échappement (42) qui mélange les gaz d'échappement expulsés par une pluralité de cylindres (15) du moteur (10);
une première unité de turbocompresseur (55) comportant une première enceinte de turbine (64) présentant une entrée qui communique avec le passage de mélange d'échappement (42) via un passage principal (81), une première enceinte de compresseur (65) connectée à la première enceinte de turbine (64) en une relation coaxiale et un premier arbre (61) s'étendant intérieurement entre la première enceinte de turbine (64) et la première enceinte de compresseur (65); et
une deuxième unité de turbocompresseur (56) comportant une deuxième enceinte de turbine (74) présentant une entrée qui communique avec une sortie de la première enceinte de turbine (64) via un passage de connexion (82), une deuxième enceinte de compresseur (75) connectée à la deuxième enceinte de turbine (74) en une relation coaxiale et un deuxième arbre (71) s'étendant intérieurement entre la deuxième enceinte de turbine (74) et la deuxième enceinte de compresseur (75), dans lequel les première et deuxième unités de turbocompresseur (55, 56) sont placées l'une à côté de l'autre en une relation mutuelle parallèle, et la première enceinte de turbine (64) est installée sur le même côté de la première enceinte de compresseur (65) où la deuxième enceinte de turbine (74) est installée par rapport à la deuxième enceinte de compresseur (75), la première enceinte de turbine (64) étant axialement décalée par rapport à la deuxième enceinte de turbine (74) en direction de la première enceinte de compresseur (65), et
le passage principal et le passage de connexion sont définis par un élément de passage principal (81) et un élément de passage de connexion (82), respectivement, **caractérisé en ce que** l'élément de passage principal (81), la première enceinte de turbine (64), l'élément de passage de connexion (82) et la deuxième enceinte de turbine (74) sont formés intégralement les uns avec les autres.

2. Système de turbocompresseur multi-étage selon la revendication 1, comprenant en outre un passage de dérivation (83) qui fait communiquer le passage de mélange d'échappement (42) avec le passage de connexion (82), dans lequel un élément (83) définissant le passage de dérivation est formé intégralement avec l'élément de passage de connexion (82).

3. Système de turbocompresseur multi-étage selon la revendication 2, dans lequel le passage de mélange (42) est muni d'une première sortie (49) qui communique avec le passage principal (81) et d'une deuxième sortie (50) qui communique avec le passage de dérivation (83), et les première et deuxième sorties (49, 50) s'ouvrent dans une surface de connexion commune (46) formée dans le collecteur d'échappement (20).

4. Système de turbocompresseur multi-étage selon la revendication 3, dans lequel une extrémité du passage principal (81) éloignée de la première enceinte de turbine (64) et une extrémité du passage de dérivation (83) éloignée du passage de connexion (82) s'ouvrent toutes les deux dans une surface de connexion commune (121) d'une bride.

5. Système de turbocompresseur multi-étage selon la revendication 3 ou 4, dans lequel la première sortie (49) du passage de mélange (42) est décalée de la deuxième sortie (50) du passage de mélange (42) dans une direction sensiblement identique à celle dans laquelle la première enceinte de turbine (64) est décalée de la deuxième enceinte de turbine (74).

6. Système de turbocompresseur multi-étage selon l'une quelconque des revendications précédentes, dans lequel la première enceinte de compresseur (65) chevauche en partie la deuxième enceinte de compresseur (75) le long d'une direction axiale du premier arbre (61).
